# EUROPEAN PATENT APPLICATION

(11) **EP 3 173 942 A1**
(43) Date of publication of application: **31.05.2017**
(21) Application number: 15306852.3
(22) Date of filing: 24.11.2015
(51) Int. Cl.: G06F 17/30

(54) **METHOD FOR DATABASE SEARCH AND CORRESPONDING DEVICE**

(71) Applicant: Thomson Licensing, 92130 Issy-les-Moulineaux (FR)
(72) Inventor: LE GARJAN, Bruno, 35576 Cesson-Sévigné Cedex (FR); GENIEUX, Vincent, 35690 Acigné (FR); CHERON, Bruno, 35576 Cesson-Sévigné Cedex (FR); CHAMPS, François, 35576 Cesson-Sévigné Cedex (FR)
(74) Representative: Huchet, Anne

(57) **Abstract**

A bit mask is associated to records of a database. A query condition is attributed a bit position in the bit mask. For queries that have a query condition for which a bit in the bit mask exists, search processing speed is improved as checking the query condition for a record of the database is reduced to verifying a bit in the bit mask associated to the record.

## Description

### FIELD

The present disclosure generally relates to the field of databases and in particular to speed improvement of database searches.

### BACKGROUND

Data stored in databases is organized in tables. Searches in a database are executed using queries that define more or less complex expressions e.g., a sequence of AND and OR operators. The design of the database, e.g., the number of tables, the fields they comprise, and indexing of search keys is adapted to a number of presupposed queries in order to speed up query processing. Usage of a database may vary over time. An optimal structure of the database as it was originally designed may no longer be adapted to a different use.

There is thus a need for further optimization of database searches.

### SUMMARY

The present disclosure aims at alleviating some of the deficiencies of database searches.

To this end, the disclosure includes a method for searching a database. The method comprises receiving a query with at least one query condition. For at least one database record for which the at least one query condition has not been evaluated yet, the at least one query condition is evaluated, and a value of a bit at a bit position attributed to the at least one query condition in a bit mask associated to the at least one database record according to a result of the evaluating, and the result is returned. For at least one database record for which the at least one query condition has already been evaluated, it is determined if the at least one query condition is true for the at least one database record based on the value of the bit, and returning a result of the determining.

According to a variant embodiment of the method the bit mask associated to the at least one database record is stored in the at least one database record.

According to a variant embodiment of the method the bit mask associated to the at least one database record is stored in a storage space that is not part of the database, the storage space comprising for each bit mask a pointer to the at least one database record with which the bit mask is associated.

According to a variant embodiment of the method a bit position in a bit mask that is attributed to a query condition is valid for a plurality of database tables of the database.

According to a variant embodiment of the method, the method further comprising adding a table to the database, comprising per different bit mask value, a list of tables and records that match to at least one query condition for which a bit in the bit mask is set.

According to a variant embodiment of the method, the method further comprising adding a table to the database relating a query condition to a bit position in the bit mask attributed to the query condition.

According to a variant embodiment of the method for a query condition for which a bit position is attributed in the bit mask, the query condition is evaluated in a background process which comprises setting of a bit at the attributed bit position in the bit mask associated with the at least one database record according to a result of the evaluating of the query condition.

The present disclosure also relates to a device for searching a database. The device comprises at least one processor and at least one network interface configured to receive a query with at least one query condition. For at least one database record for which the at least one query condition has not been evaluated yet, the at least one processor is configured to evaluate the at least one query condition, for changing a value of a bit at a bit position attributed to the at least one query condition in a bit mask associated to the at least one database record according to a result of the evaluation, and for returning the result of the evaluation. For at least one database record for which the at least one query condition has already been evaluated, the at least one processor is configured to determine if the at least one query condition is true for the at least one database record based on the value of the bit, and for returning a result of the determining.

According to a variant embodiment of the device, the at least one database record is further configured to store the bit mask associated to the at least one database record.

According to a variant embodiment of the device, the bit mask associated to the at least one database record is stored in a storage space that is not part of the database, the storage space comprising for each bit mask a pointer to the at least one database record with which the bit mask is associated.

### BRIEF DESCRIPTION OF THE DRAWINGS

More advantages of the present disclosure will appear through the description of particular, non-restricting embodiments. In order to describe the manner in which the advantages of the present disclosure can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring of the disclosure.

The exemplary embodiments will be described with reference to the following figures:
**Figure 1** is a block diagram of a database system.
**Figure 2** is a diagram illustrating how information in a database is logically stored in tables. In **figure 2a****,** a first table stores and relates client names to client ages. In **figure 2b****,** a second table stores and relates client names to postal codes. An index for table 1 is shown in **figure 2c** as organized according to alphabetical order in a Btree structure.
**Figure 3** is improvement for speeding up searches in a database according to an embodiment of the present disclosure related to table 1.
**Figure 4** is an improvement for speeding up database searches according to an embodiment related to table 2.
**Figure 5** is an embodiment for speeding up searches in a database according to an embodiment related to both tables 1 and 2.
**Figure 6** is an embodiment for speeding up searches in a database wherein SSMs of tables 1 and 2 are combined in single SSM entries.
**Figure 7** is an embodiment for speeding up database searches using a sliding window technique.
**Figure 8** is an example embodiment of a device according to the present disclosure.
**Figure 9** is a flow chart according to a particular embodiment of the present principles.

### DETAILED DESCRIPTION

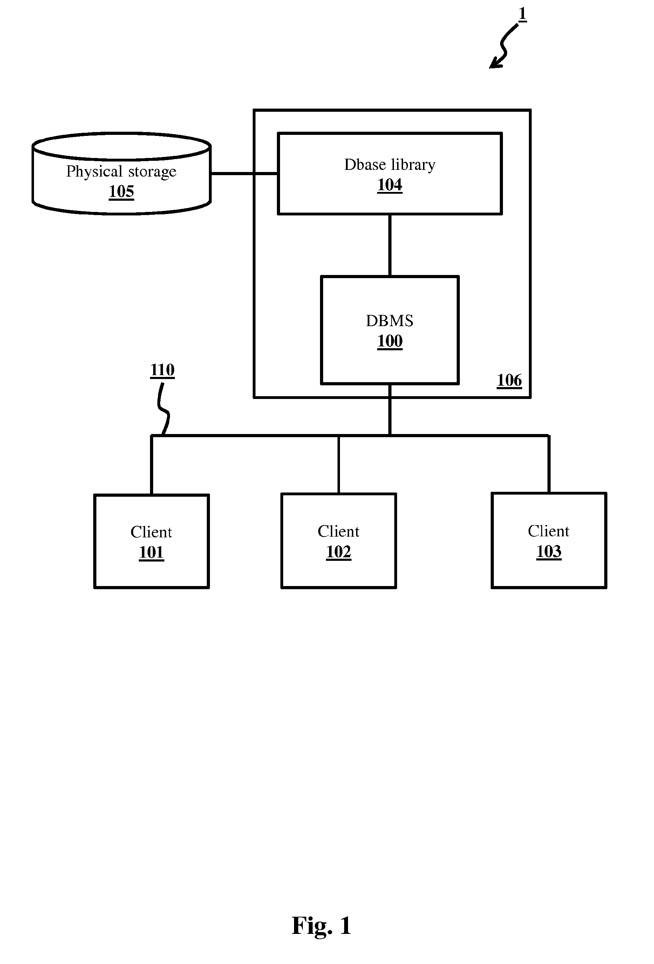

**Figure 1** is a block diagram of a database system **1.** The system comprises a database management system (DBMS) **100,** database clients **101, 102** and **103,** network **110,** a database library **104** and a physical storage **105.** The DBMS **100** comprises functions for storing, retrieving and manipulating information in database tables. These functions are rendered available to the clients **101-103** of the database system which have access to the DBMS **100** via the network **110.** The clients **101-103** request data from the database system using queries e.g., using a Structured Query Language (SQL). The DBMS **100** uses a library **104** (e.g., SQLite) that stores the entire database (tables, indices, data) as a file that is stored on physical storage media **105.**

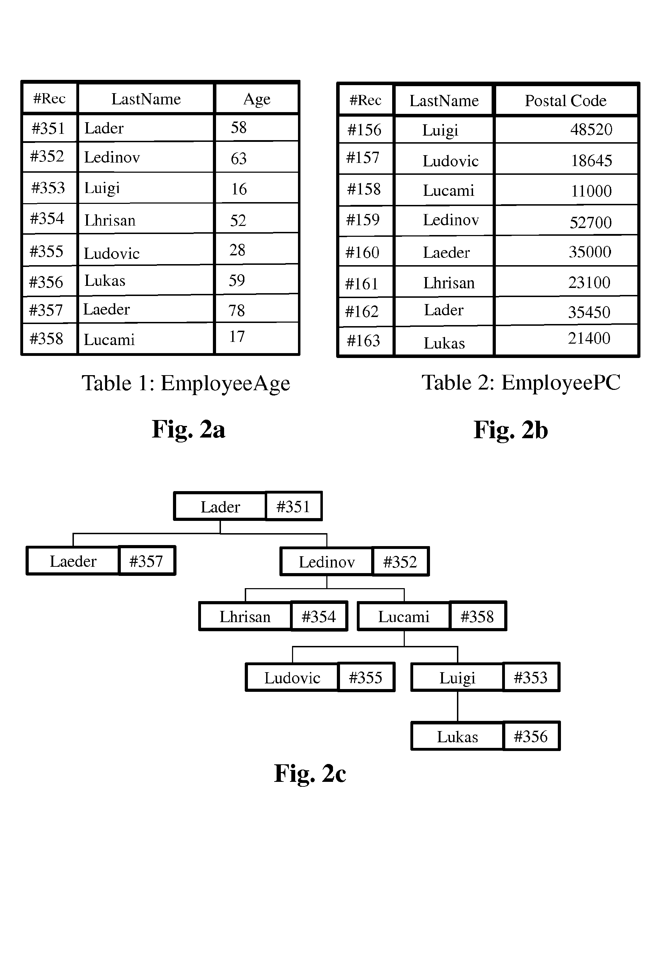

**Figures 2a****-c** are diagrams illustrating how information in a database is logically stored in tables. For example, in **figure 2a** a first table stores and relates client names and client ages. In **figure 2b** a second table stores and relates client names and postal codes. Each row of a table is referred to as a database record. A user of one of the clients **101-103** may enter a query for searching matching database records that meet simple tests such as "SELECT LastName, Age FROM EmployeeAge WHERE LastName = 'Lu*'". This means that the user wants to retrieve from table "EmployeeAge" the last name and age of all employees whose last names start with "Lu". A user may enter another query "SELECT LastName, PostalCode FROM EmployeePC WHERE LastName = 'Lu*'", to retrieve the last name and postal code of all employees whose last names starts with "Lu". A user may enter a more complex query such as "SELECT LastName, PostalCode FROM EmployeeAge, EmployeePC WHERE LastName= 'Lu*' AND Age> 50", in order to retrieve the last name and postal codes of all employees whose last name starts with 'Lu' and whose age is above fifty. A query is processed by parsing the database tables and records, retrieving information from the records and verifying if a record matches the query condition. For huge databases and complex queries, the query processing time can be important if all records of multiple tables are to be parsed in order to find out if a record matches to a search criteria. Indexing may help for faster searching. A typical index is per key of a table and stores the key and a record number for a record in the table. For example, an index for table 1 is shown in **figure 2c** as organized according to alphabetical order in a Btree structure. For the query "SELECT LastName, Age FROM EmployeeAge WHERE LastName = 'Lu*'", the Btree of figure 2c is parsed to find that four records (with LastName Lucami, Ludovic, Luigi and Lukas) correspond to the expression LastName = 'Lu*'. The record numbers of these records are retrieved from the Btree index structure. This enables to directly retrieve the "Age" field of the four records from the database using the record numbers in the Btree index structure. The database search speed for the query is considerably improved since only four records in the table 1 were read. However, this is at the price of maintaining the index structure. Maintaining an index structure is costly in terms of resource use, while it may not be efficient to maintain the index if the queries on the database do not, or no longer, make use of the index.

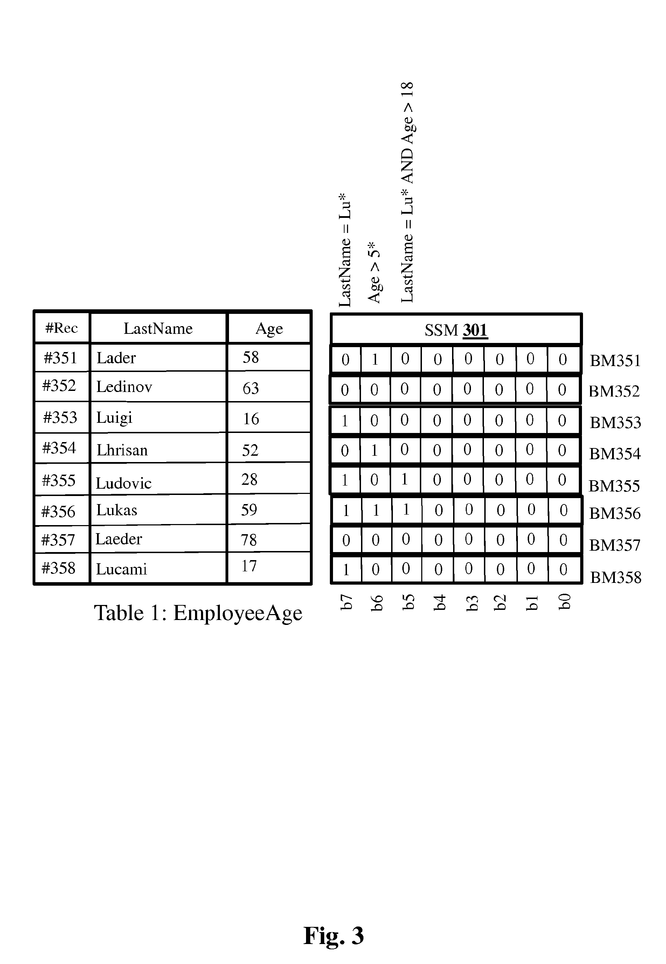

**Figure 3** is an improvement for speeding up searches in a database according to an embodiment of the present disclosure which is related to example table 1 as depicted in figure 2a and that is reproduced here again. Shown next to table 1 is a single byte Search Speed-up bit Mask **301** or SSM that is associated with each record of table 1. Each of the bit positions b7-b5 of the SSM corresponds to a particular query condition, where the value of each bit indicates whether the corresponding record corresponds to the particular query condition. For example the left most bit b7 of the SSM **301** corresponds to the query condition "LastName = 'Lu*"'. Bit b7 of the SSMs **BM353, BM355** and **BM356** are respectively associated with records #353, #355, and #356 is set to the binary value '1' as for these records the query condition is true. Bit b6 of the SSM **301** corresponds to query "Age > 5*". Bit b6 of the SSMs **BM351, BM354 and BM356** are therefore set to binary '1' for records #351, #354 and #356. Bit b5 of the SSM corresponds to the query condition "LastName='Lu*' AND Age>18". Bit b5 of the SSMs **BM355** and **BM356** is therefore set to binary '1' for records #355 and #356. Bits b4-b0 are not attributed to any query condition and are therefore not used in SSM **301.** When the query condition is used for a first time in a query, the records of table 1 are parsed. As the records are parsed and it is found that a record matches the query condition, the bit of the SSM that corresponds to the query condition is updated and set to '1'. For any subsequent query that uses the same query condition, the query is processed fast since it is sufficient for determining if a record matches to a query condition by verifying the value of the corresponding bit in the SSM associated with the record. For example, the query condition "LastName='Lu*' is translated by the database manager in "SSM AND 0x80". And the query "SELECT LastName, Age FROM EmployeeAge WHERE LastName = 'Lu*' translates to "SELECT LastName, Age FROM EmployeeAge WHERE (SSM AND 0x80)". The latter query is quicker to execute than the previous as it only requires evaluation of a simple binary expression.

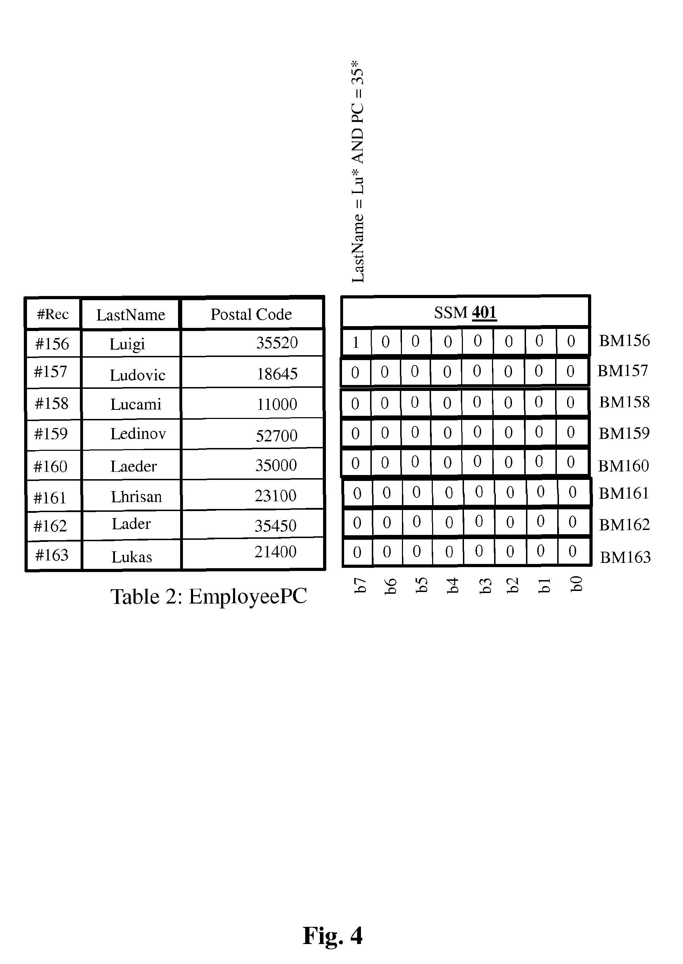

Likewise, **Figure 4** illustrates an improvement for speeding up database searches according to an embodiment of the present disclosure which is related to example table 2, which is represented here again. Shown next to table 2 is a single byte SSM **401.** Bit b7 of the SSM **401** is assigned to query condition "LastName='Lu*' AND PC=35*". This condition is true for record #156, and therefore bit b7 of the SSM **BM156** associated with record #156 of table 2 is set to '1'. Bits b6-b0 are not used in SSM **401.** A query "SELECT LastName, PostalCode FROM EmployeePC WHERE LastName='Lu*' AND PC=35*" translates to "SELECT LastName, PostalCode from EmployeePC WHERE (SSM AND 0x80)".

The skilled person will readily acknowledge that an SSM can span any number of bits, nibbles or bytes.

In the example embodiments illustrated by figures 3 and 4, each table has its own SSM and associated query conditions. A SSM for one table is in principle not destined to be reused for another table. According to a particular embodiment, a SSM is comprised in the database table and record to which it is associated. According to a variant embodiment, a SSM is kept apart from the database tables and records. The advantage of the latter solution is that it is not necessary to parse database records to read the SSMs and to determine the values of the bits in the SSM. The SSMs can be stored in memory, e.g. cache memory for quick access, and be regularly written to a permanent storage medium for backup. Associated with each SSM is a reference to the table to which it applies and to the relevant record number in that table. For example, the SSM **BM156** of figure 4 comprises a reference to table 2, record #156.

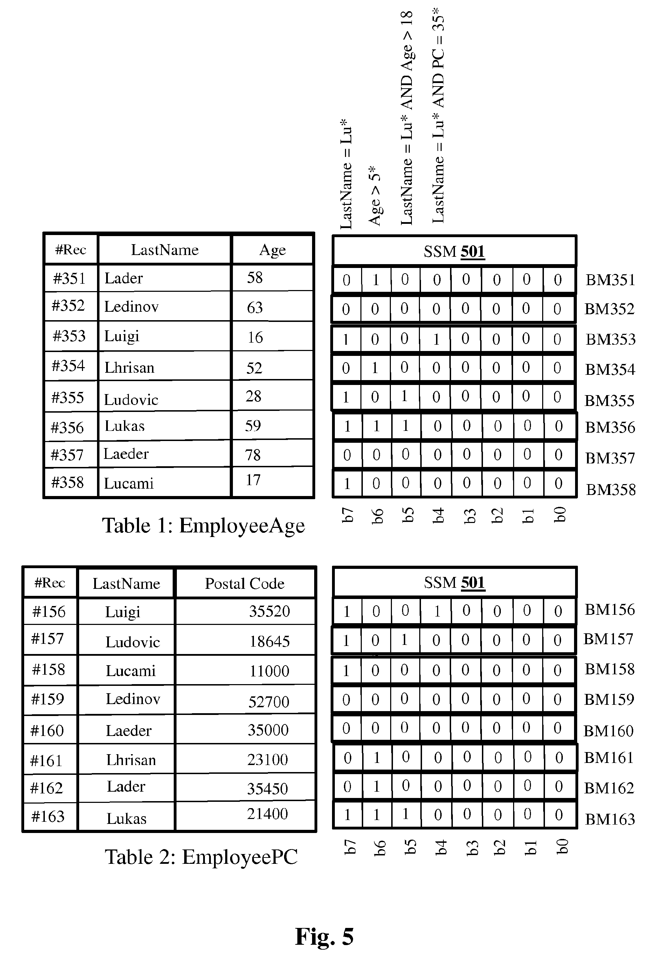

**Figure 5** illustrates a further improvement for speeding up database searches according to an embodiment of the present principles and is related to both tables 1 and 2. More specifically, figure 5 illustrates a variant embodiment where a same SSM is valid for a plurality of tables. In the SSM **501** each bit position corresponds to a same query condition in tables 1 and 2. Position b7 corresponds to query condition "LastName = 'Lu*'". Position b6 corresponds to query condition "Age> 5*". Position b5 corresponds to "LastName='Lu*' AND Age>18". Position b4 corresponds to "LastName='Lu*' AND PC=35*".

The condition "LastName=' Lu*'" is true for multiple records in tables 1 and 2, i.e. for records #352, #355 and #356 in table 1 - and thus also for records #156, #157, #158 and #163 of table 1. The corresponding bit b7 is thus set to '1' for each of these records. When a subsequent query with a condition "LastName=Lu*" is done over tables 1 and 2, it is sufficient to verify the value of bit b7 of each SSM associated with each record of tables 1 and 2, that is **BM351, BM355, BM356, BM156, BM157, BM158** and **BM163.** Combined records can thus be retrieved from these tables e.g. the following data retrieved from tables 1&2 corresponds to the query condition: Luigi/16/35520; Ludovic/28/18645; Lukas/59/21400 (LastName/Age/PostalCode). For example, the query "SELECT LastName, Age, PostalCode FROM EmployeeAge, EmployeePC WHERE LastName='Lu*'" is translated to "SELECT LastName, Age, PostalCode FROM EmployeeAge, EmployeePC WHERE (SSM AND 0x80)".

The same principle applies to the other query conditions that were given as an example.

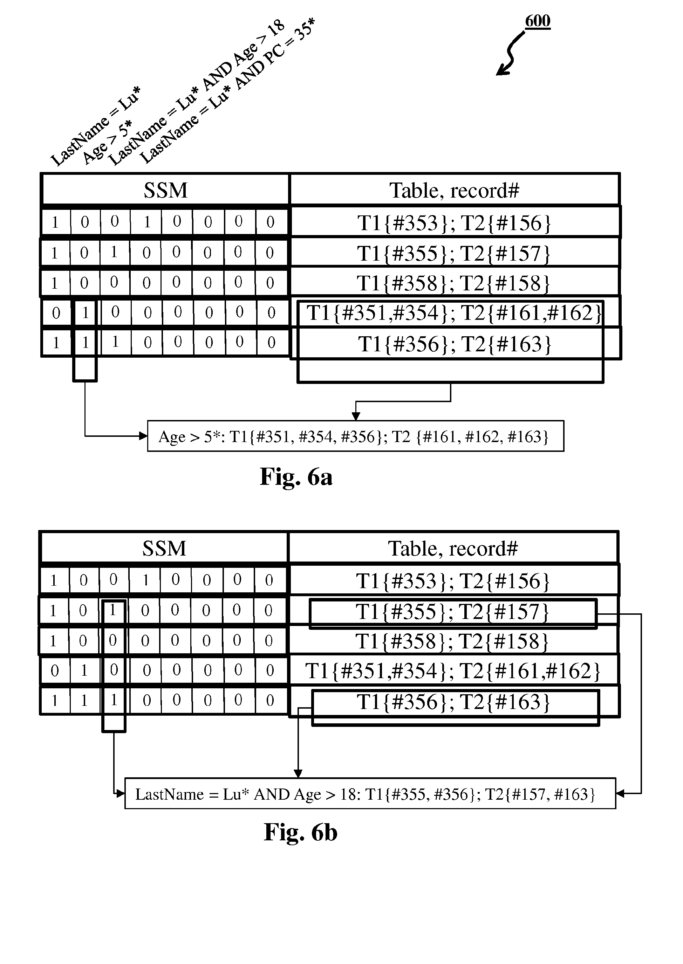

**Figure 6** is an embodiment for speeding up searches in a database wherein SSMs of tables 1 and 2 are combined in single SSM entries. In **Figures 6a and 6b****,** SSM **BM353** of table 1 and **BM156 of** table 2 are combined for a single entry of the SSM with a value 1001000. SSM **BM355** of table 1 and **BM157** of table 2 are combined for a single entry of SSM 1010000, etc. In order to find the tables and matching records for a given query condition, the SSMs are associated with further information such as table and record number. Information can now be retrieved quickly: e.g. see **figure 6a** to find all the records in the database tables that match to a query condition "Age>5*", the SSM table **600** can be parsed; knowing that bit b6 corresponds to the query condition, it is quickly determined that for table 1, record numbers #351, #354 and #356 match, and for table 2, record numbers #161, #162 and #163 match. For example, the query "SELECT LastName, Age, PostalCode FROM EmployeeAge, EmployeePC WHERE Age=5*" translates to "SELECT LastName, Age, PostalCode FROM EmployeeAge {#351, #354, #356}, EmployeePC {#161, #162, #163}", meaning that LastName, Age and PostalCode are to be retrieved from the indicated record numbers of the specified tables only. **Figure 6b** gives an example for query condition "LastName='Lu*' AND Age>18"; it is quickly determined from table **600** that records #355 and #356 from table 1 and records #157 and #163 from table 2 match to the query condition. Table **600** thus comprises per different bit mask value a list of tables and records that match to the one or more query conditions for which a bit in the bit mask is set.

According to a variant embodiment a table is added to the database, or preferably outside of the database for improved performance, which relates a query condition to a bit position in the SSM. See **table A** hereunder for example:

**Table A: query condition and corresponding SSM bit position**

| **Query condition** | **Bit position in SSM** |
|---|---|
| LastName='Lu*' | 0x80 |
| Age>5* | 0x40 |
| LastName='Lu*' AND Age>18 | 0x20 |
| LastName='Lu*' AND PC=35* | 0x10 |

The "bit position in SSM" value can then be used as a logical AND bit mask that can be applied to SSM values in order to find tables and records that correspond to a query condition. E.g. to find records that correspond to query condition "Age>5*", the table of figure 6 is parsed on the SSMs with an AND bitmask of 0x40.

According to a variant embodiment, a bit in the SSMs that corresponds to a given query condition is set when the given query condition is used for a first time. This will not take much extra time as database records need to be parsed anyway to verify the query condition. Some extra time is possibly caused by write delays of write actions necessary to set bits of the SSM for records that correspond to the query condition. This write delay is reduced significantly when the SSMs are not stored in the records of the tables of the database but are stored separately.

According to a variant embodiment, the SSM bits are set in a background process in order not to penalize a first time execution of queries due to SSM updates. In such case, it can happen that not all records of a database were evaluated for a given query condition when a query using the given query condition is executed. For some records the corresponding bit in the associated SMM will have been set, while not for others. For this case, a record number pointer can be maintained for each query condition. The record number pointer is increased at each record number for which the query condition has been evaluated. The record number pointer then points to the last evaluated record number, e.g., the previous table can be modified to comprise this information, see **table B** hereunder:

**Table B: table A enhanced with information related to records not handled yet**

| **Query condition** | **Bit position in SSM** | **LastRec #** |
|---|---|---|
| LastName='Lu*' | 0x80 | T1-all; T2-all |
| Age>5* | 0x40 | T1-#354; T2-all |
| LastName='Lu*' AND Age >18 | 0x20 | T1-all;T2-#161 |
| LastName='Lu*' AND PC=35* | 0x10 | T1-all;T2-#161 |

Meaning, for query condition "LastName='Lu*'", the query condition has been evaluated for all records of tables 1 & 2, while, as an example, for query condition "Age>5*", the query condition is evaluated entirely for table 1 but only up to record #354 for table 1. This solution can be applied when for the evaluation of query conditions records are parsed and corresponding bit of associated SSMs are set in sequential order. To indicate that a query condition has not been evaluated for any database record of a given table, the LastRec# can be initialized with a specific value, e.g. -1 or 0xFFFFFFFF. The LastRec# record number pointer that indicates the record number in a table of a last record for which a given query condition has been evaluated, and for which thus the corresponding bit in the associated SSM has been set or not according to the evaluation of the query condition for the record, can so be used to determine if a query received with a given query condition is a first query or a subsequent query: if LastRec# has the specific value, it is a first query. If LastRec# does not have the specific value, it is a subsequent query. Likewise, LastRec# can be used to determine if a given query condition has been evaluated for a given database record or not. E.g., if the LastRec# is higher or equal to the record number of the given database record, the query condition has already been evaluated for the given database record, and otherwise not.

Alternatively, the information related to the records for which the query condition has not been evaluated yet is a list e.g. T2{162,163} or T1 {354, 142-170}. When a query condition is to be verified, the records for which the query condition has not been evaluated yet are handled in the classical manner, i.e. the record is read to evaluate whether the record matches to the query condition. Once the query condition is evaluated, the corresponding bit in the associated SSM is updated and "LastRec#" can be updated accordingly. Thus a query having a query condition for which a bit in the SSM is present but that has not be evaluated for all records can still be executed with increased speed for the records for which the query condition has been evaluated. For example, the query "SELECT LastName, Age, PostalCode FROM EmployeeAge, EmployeePC WHERE LastName='Lu*' AND Age>18" is translated to a first query "SELECT LastName, Age, PostalCode FROM EmployeeAge, EmployeePC WHERE (SSM AND 0x80)" and a second query "SELECT LastName, Age, PostalCode FROM EmployeeAge, EmployeePC WHERE LastName='Lu*' AND Age>18" for all records of table T2 (EmployeePC) after record #161.

If a query condition becomes obsolete, it is no longer interesting to leave the corresponding bit in the SSM attributed to the query condition in order to free space in the SSM and to stop processes that allow to keep the corresponding bit in the SSM updated for the database records. For an obsolete query condition, the LastRec of the corresponding database table(s) (e.g. of T1 and/or T2) can be set to zero. It is not necessary to reset the relevant bit in the associated SSM corresponding to the query condition to zero in the SSMs associated with the database records. In other words, whenever the bit position is reused for another query condition, when LastRec is zero it means that no records have been evaluated for the query condition. If records are evaluated for the query condition, LastRec is updated accordingly.

According to a variant embodiment, it is verified at insertion of records in the database whether the record to insert matches to any of the query conditions for which a bit is attributed in the SSM. If the record matches, the record is inserted and the corresponding bit in the SSM is set.

It can be advantageous to attribute bit positions in the SSM according to popularity or frequency of use of a query condition to save memory space required for storing the SSMs and to save processing time required for keeping the SSMs updated. A policy can be defined to privilege the attribution of bits in the SMM to query conditions according to frequency of use of the query condition or priority of the query condition. The popularity or frequency of use of a query condition can be measured among a plurality of clients and can be evaluated with a counter that is increased with each occurrence of a query condition. For example, if the SSM spans one byte, the eight most frequently used query conditions may be attributed a bit in the SSM. Popularity or frequency of use of a query condition may vary over time.

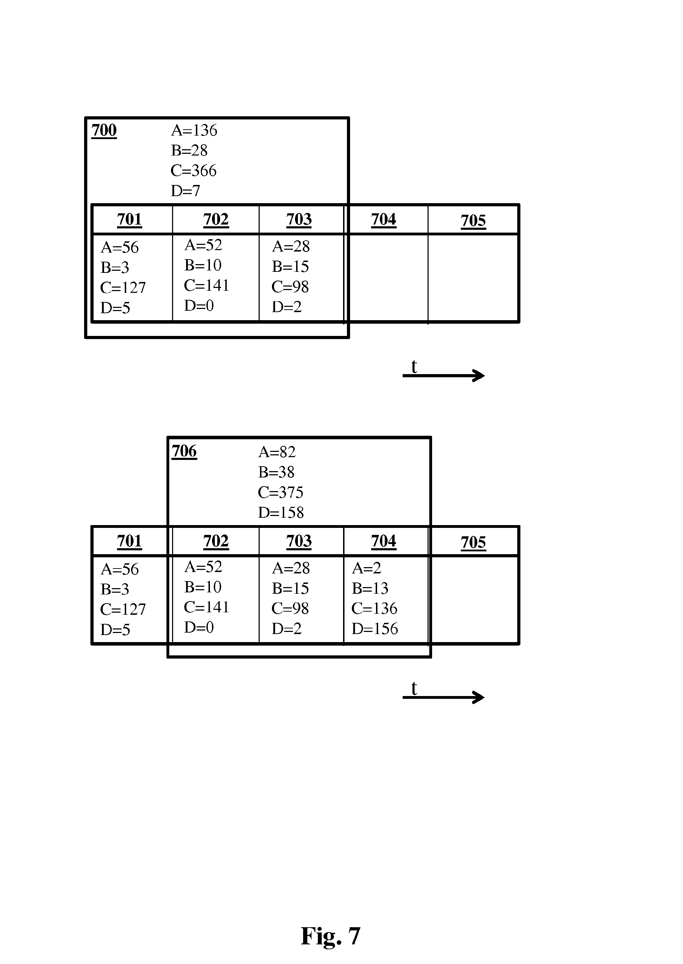

Figure 7 is an embodiment of a combination of timestamping of use of a query condition and a sliding window used to regularly update the list of most frequently used query conditions and thus avoid attribution of bits in the SSMs that were once used frequently but that are no longer used as frequently. Boxes **701** to **705** represent time periods, for example two hours, twenty-four hours, a day, or seven days. The values in each box represent query conditions and frequencies of use during the time period. For example, in box **701,** the value A=56 means that query condition A (corresponding, for example to a query condition "LastName=' Lu*'") was used 56 times. Boxes **700** and **706** represent a sliding window. According to the example of figure 7, the sliding window spans 3 time periods. At the end of a time period, the sliding window slides to the right. Inside each box representing the sliding window are the totals for each query condition measured over the sliding window duration. For example, for sliding window **700,** query A was used 136 times and query condition D was used 7 times. For sliding window **706,** query A was used 82 times and query condition D was used 158 times. If, for example, this tendency is confirmed in further sliding windows and query condition D is not yet attributed a bit position in the SSM, a bit position in the SSM may be attributed to query condition D. If space becomes lacking in the SSM, the query condition D may be attributed a bit position in the SSM that was previously attributed to another query condition (e.g. to query condition B as it is relatively infrequently used).

According to a variant embodiment, a weighting policy can be defined to privilege the attribution of bits in the SMM to query conditions according to priority of the query condition. For example, an evaluation of a query comprising a complex query condition will benefit largely from an application of the present disclosure. Even though the complex query condition is used less frequently than a simpler query condition, depending on multiple parameters, overall database performance can benefit from attributing a bit in the SSM to the less frequently used complex query condition instead of attributing a bit in the SSM to the more frequently used simple query condition. Therefore, complex query conditions can be given more weight in a decision of attributing a bit in the SSM for a query condition based on frequency of occurrence of a query condition. Referring to the sliding window example of figure 7, supposing that query condition B is a relatively complex query (i.e. more complex than A, C or D), a weighting factor may be applied to query condition B, for example in the form of a multiplication value of two, giving, in sliding window **700** a value of 56 and in the sliding window **706** a value of 76 for query condition B. The weighting factor may be determined based on measurements of query processing duration or on evaluation of the complexity of the query. According to a variant embodiment, the weighting factor is attributed to a query condition according to query priority. For example, it can be desirable to give a query condition a high priority even if the query condition is used rarely (for example, as part of a monthly query for establishing sales figures).

According to a variant embodiment, a complex query condition is split up a plurality of query conditions and only some of the plurality of query conditions of the complex query condition are attributed a bit in the SSM. For example, for the complex query condition "Rating<=14 AND ((Category=0x14) OR (Category=0x16)) AND Description CONTAINS 'Bourvil'", it is observed that the query condition is frequently used but with a frequently varying last query condition e.g. "Description CONTAINS 'Funes'", "Description CONTAINS 'Coluche'" etc.. Attributing a bit in the SSM to the full complex expression is then relatively too costly in terms of available space in the SSM and processing cost of maintaining the SSM. In this case it is more efficient to attribute a bit in the SSM to the common part of the complex query condition only, i.e. to the first query condition ""Rating<=14 AND ((Category=0x14) OR (Category=0x16))". For example, supposing that bit b7 of the SSM is attributed to the first query condition, a search "Rating<=14 AND ((Category=0x14) OR (Category=0x16)) AND Description CONTAINS 'Bourvil'" will then be translated in "(SSM AND 0x80) AND (Description CONTAINS 'Bourvil')" while a search "Rating<=14 AND ((Category=0x14) OR (Category=0x16)) AND Description CONTAINS 'Funes'" will be translated in "(SSM AND 0x80) AND (Description CONTAINS 'Funes')".

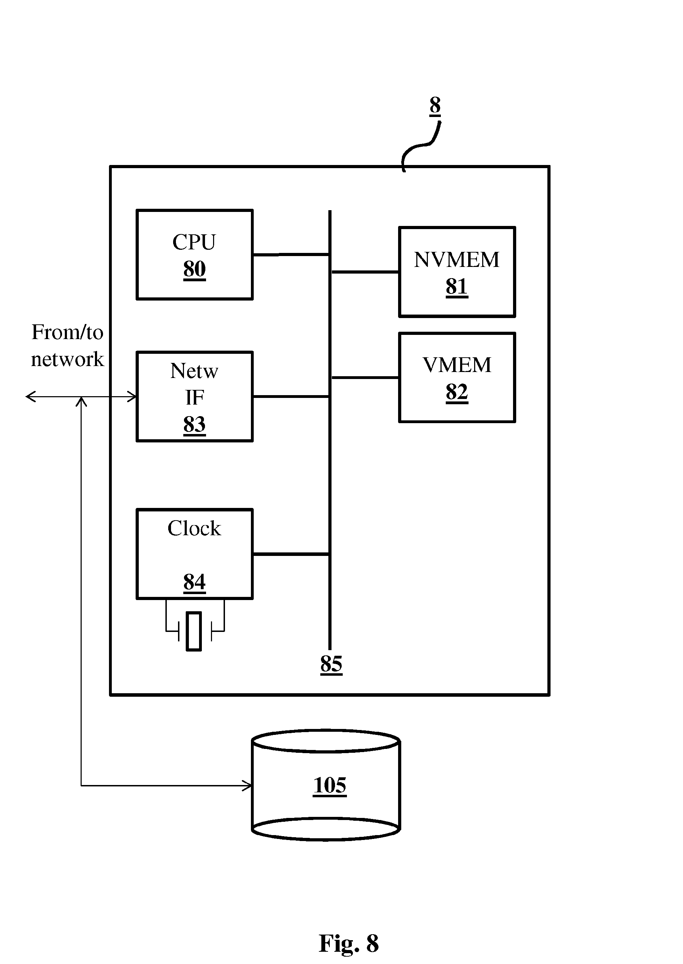

**Figure 8** is an example embodiment of a device 8 according to the present disclosure. The device is for example device **106** of figure 1. The device comprises at least one processor **80,** a non-volatile memory **81,** a volatile memory **82,** at least one network interface **83,** a clock **84,** and an internal data and communication bus **85.** Clock **84** provides device **8** with an internal timing and clock reference. Volatile and non-volatile memories **81** and **82** provide the device **8** with internal storage for storing instructions for the at least one processor **80** and parameters and variables related to these instructions. The memories **81** and **82** may comprise database tables, database indexes, bit masks, and database records. Network interface **83** allows the device **8** to communicate with other network devices such as external storage **105.** External storage **105** is for example a single storage device, a plurality of storage devices, in the form of solid state or hard disk drives, or a cloud data storage. The external storage **105** may comprise a database and other data. The at least one processor **80** is configured to associate a bit mask e.g., **401** or **501,** to at least one database record stored in a database; to attribute a bit position, e.g., **b7-b0,** in the bit mask to a query condition. The at least one network interface **83** is configured to receive a query having at least one query condition, for evaluating the at least one query condition for the at least one database record, and for determining if the query condition is true, and for returning the result of the evaluating/determining.

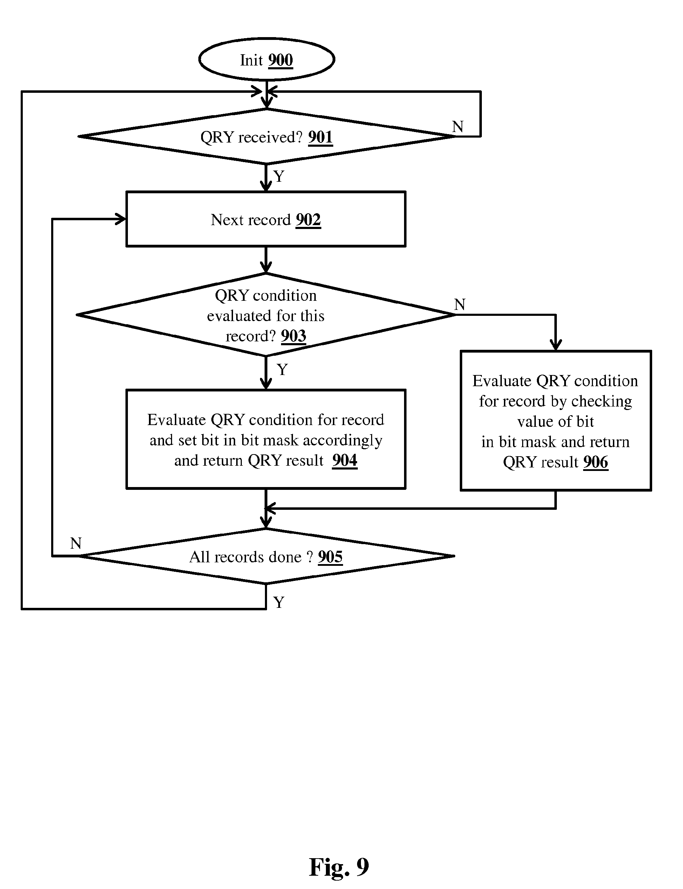

**Figure 9** is a flow chart according to a particular embodiment of a method according to the present disclosure. The first step **900** is an initialization step wherein variables and parameters are initialized that are used for the method. In a step **901,** it is determined if a query is received. If a query is received step **902** is done, in which the next record is parsed of a database record in a table related to the query condition. In a step **903,** it is determined if the query condition has already been evaluated for this record. This is for example done by verifying if there is a bit associated to the query condition in a bit mask associated to the record, and if so, if LastRec# associated to the query condition and for this table is higher or equal to the record number of the record for which the query condition is to be evaluated. If it is determined that the query condition is not yet determined for this record, the query condition is evaluated in step **904,** the corresponding bit in the bit mask is set accordingly (e.g., to binary '1' if the record matches to the query condition) and the query result is returned (e.g., the query result is a Boolean 'true' or 'false' and this result is returned to a computer executable program calling the method with the query received in step **901**). In a step **905,** it is evaluated if all records of this table have been parsed. If not, the method continues with step **902.** If all records of the table have been parsed, the method returns to step **901** of waiting for a next query (or with evaluating a next query condition of the same query). If, in step **903** it is determined that the query condition has already been evaluated for this record, step **906** is executed, in which the query condition is determined for the record by checking the value of the bit associated to the query condition in the bit mask associated to the record. The query result is returned according to the value of the bit. E.g., if the bit has a value zero, the query result is a Boolean 'False', and if the bit has a value of a binary one, the query result is a Boolean 'True'. After evaluation in step **906,** the method continues with step **905.**

As will be appreciated by one skilled in the art, some elements in the drawings may not be used or be necessary in all embodiments. Some operations may be executed in parallel. Variant embodiments other than those illustrated and/or described are possible.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing, as is readily appreciated by one of ordinary skill in the art: a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. A method for searching a database, **characterized in that** it comprises:
receiving (901) a query with at least one query condition;
for at least one database record for which the at least one query condition has not been evaluated yet, evaluating (904) said at least one query condition, changing a value of a bit at a bit position attributed to said at least one query condition in a bit mask associated to said at least one database record according to a result of said evaluating, and returning said result of said evaluating;
for at least one database record for which said at least one query condition has already been evaluated, determining (906) if said at least one query condition is true for said at least one database record based on said value of said bit, and returning a result of said determining.

2. The method according to claim 1, wherein said bit mask associated to said at least one database record is stored in said at least one database record.

3. The method according to claim 1, wherein said bit mask associated to said at least one database record is stored in a storage space that is not part of said database, said storage space comprising for each bit mask a pointer to said at least one database record with which said bit mask is associated.

4. The method according to any of claims 1 to 3, wherein a bit position in a bit mask that is attributed to a query condition is valid for a plurality of database tables of said database.

5. The method according to claim 4, further comprising adding a table (600) to said database, comprising per different bit mask value, a list of tables and records that match to at least one query condition for which a bit in the bit mask is set.

6. The method according to any of claims 1 to 5, further comprising adding a table to said database relating a query condition to a bit position in the bit mask attributed to the query condition.

7. The method according to any of claims 1 to 6, wherein, for a query condition for which a bit position is attributed in said bit mask, said query condition is evaluated in a background process which comprises setting of a bit at said attributed bit position in said bit mask associated with said at least one database record according to a result of said evaluating of said query condition.

8. A device (8, 106) for searching a database, **characterized in that** it comprises at least one processor (80) and at least one network interface (83) configured to:
receive a query with at least one query condition;
for at least one database record for which the at least one query condition has not been evaluated yet, evaluate said at least one query condition, changing a value of a bit at a bit position attributed to said at least one query condition in a bit mask associated to said at least one database record according to a result of said evaluation, and return said result of said evaluation;
for at least one database record for which said at least one query condition has already been evaluated, determine if said at least one query condition is true for said at least one database record based on said value of said bit, and returning a result of said determining.

9. The device according to claim 8, wherein said at least one database record is further configured to store said bit mask associated to said at least one database record.

10. The device according to claim 9, wherein said bit mask associated to said at least one database record is stored in a storage space (81, 82, 105) that is not part of said database, said storage space comprising for each bit mask a pointer to said at least one database record with which said bit mask is associated.
